(19) Europäisches Patentamt / European Patent Office / Office européen des brevets

(11) **EP 3 831 136 B1**

(12) **EUROPEAN PATENT SPECIFICATION**

(45) Date of publication and mention
of the grant of the patent:
**26.11.2025 Bulletin 2025/48**

(21) Application number: **18756221.0**

(22) Date of filing: **16.08.2018**

(51) International Patent Classification (IPC):
*H04W 72/04* (2023.01)  *H04W 72/12* (2023.01)
*H04W 84/00* (2009.01)  *H04W 72/20* (2023.01)

(52) Cooperative Patent Classification (CPC):
**H04W 84/005; H04W 72/20**

(86) International application number:
**PCT/EP2018/072228**

(87) International publication number:
**WO 2020/035142 (20.02.2020 Gazette 2020/08)**

(54) **RECEIVER-BASED SIDELINK RESOURCE SELECTION**

EMPFÄNGERBASIERTE RESOURCEN AUSWAHL FÜR EINEN SIDELINK

SÉLECTION PAR LE RECEVEUR DE RESOURCES POUR LIAISON LATÉRALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.06.2021 Bulletin 2021/23**

(73) Proprietor: HUAWEI TECHNOLOGIES CO., LTD.
**Shenzhen, Guangdong 518129 (CN)**

(72) Inventors:
• **AYAZ, Serkan**
 **80992 Munich (DE)**
• **MEDINA, Daniel**
 **80992 Munich (DE)**

(74) Representative: **Epping - Hermann - Fischer
Patentanwaltsgesellschaft mbH
Schloßschmidstraße 5
80639 München (DE)**

(56) References cited:
**WO-A1-2016/163972**

• INTEL CORPORATION: "Clarification on Resource Selection Procedure (Correction to V2V CR - 36.213)", vol. RAN WG1, no. Lisbon, Portugal; 20161010 - 20161014, 9 October 2016 (2016-10-09), XP051149494, Retrieved from the Internet <URL:http://www.3gpp.org/ftp/Meetings_3GPP_SYNC/RAN1/Docs/> [retrieved on 20161009]
• "3 Generation Partnership Project; Technical Specification Group Radio Access Network; Evolved Universal Terrestrial Radio Access (E-UTRA); Physical layer procedures (Release 15)", 3GPP STANDARD; TECHNICAL SPECIFICATION; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V15.2.0, 19 July 2018 (2018-07-19), pages 472 - 525, XP051475042

**Description**

TECHNICAL FIELD

In general, the present disclosure relates to the field of wireless communications. More specifically, the present disclosure relates to devices and a computer program for sidelink communication in a V2X communication network, in particular sidelink communication devices for allocating sidelink radio.

BACKGROUND

In 3GPP (3rd Generation Partnership Project) cellular networks, such as 4th Generation (4G) or 5th Generation (5G) networks, V2X (Vehicle-to-Everything) services can be provided via a so-called PC5 interface (also known as sidelink or D2D communication) and/or via a Uu interface (also known as uplink/downlink), as specified in 3GPP TS 36.300, "LTE; Evolved Universal Terrestrial Radio Access (E-UTRA) and Evolved Universal Terrestrial Radio Access Network (E-UTRAN); Overall description; Stage 2". Support of V2X services via the PC5 interface is provided by V2X sidelink communication, which is a communication mode in which User Equipments (UEs) such as vehicles can communicate with each other directly over the PC5 interface. This communication mode is supported when the UE is served by the network and when the UE is outside of network coverage.

A UE supporting V2X sidelink communication can operate in two modes for sidelink radio resource allocation: in a first mode, known as "scheduled resource allocation", a UE requests radio resources from a base station for transmission of sidelink data, and the base station allocates dedicated transmission radio resources to the UE in a centralized manner. In a second mode, known as "UE autonomous resource selection", the UE on its own selects radio resources for transmission of sidelink data from (pre)configured resource pools based on sensing in a distributed manner.

Recently, service requirements to support enhanced V2X (eV2X) scenarios have been specified in 3GPP TS 22.186. These requirements demand new solutions in the design of the 5G NR (New Radio) radio interface. In particular, the following requirements are specified: the 3GPP system shall allow UEs supporting a V2X application to use NR for direct communication when the UEs are not served by a RAN using NR, and the 3GPP system shall support efficient coordination of radio resources used for transport of messages to maximize the utilization of the available spectrum and to ensure the required reliability.

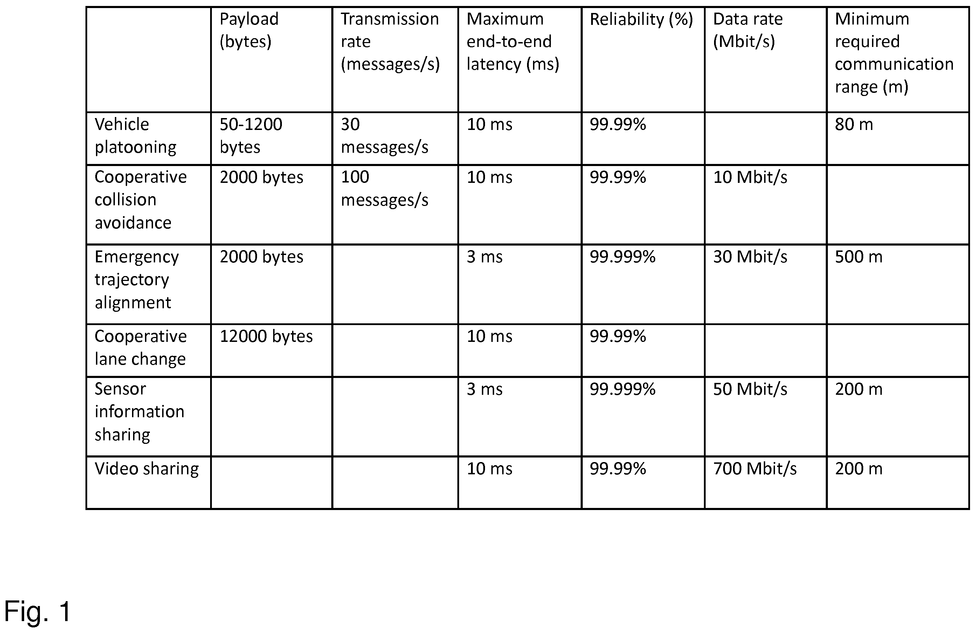

Different eV2X scenarios require the transport of messages with different performance requirements for the 3GPP system. Some of the most stringent requirements specified in 3GPP TS 22.186 are summarized in the table of figure 1.

In UE autonomous resource selection (also referred to as sidelink transmission mode 4), a UE having data to transmit (re)selects PSSCH (Physical Sidelink Shared Channel) resources autonomously based on sensing within a (pre)configured PSSCH resource pool. At the end of each reselection period, the UE keeps the previously selected resource with a probability *probResourceKeep*. If the UE does not keep the previously selected resource, the UE performs the following steps: selects the number of retransmissions (0 or 1) as configured in *allowedRetxNumberPSSCH*; selects an amount of frequency resources (number of contiguous subchannels, $L_{subCH}$) within the range configured by upper layers between *minRB-NumberPSSCH* and *maxRB-NumberPSSCH*; sets the resource reservation interval ($P_{rsup\_TX}$) to one of the allowed values configured by upper layers in *restrictResourceReservationPeriod*; randomly selects a PSSCH resource among the resources reported by the PHY (physical) layer and uses it to select a set of periodic resources spaced by the resource reservation interval ($P_{rsvp\_TX}$).

In the time domain, the set of subframes assigned to a PSSCH resource pool is specified as part of the resource pool configuration by means of a bitmap $b_0 \dots b_{L_{bitmap}-1}$ of length $L_{bitmap}$ bits. Similarly, in the frequency domain, the set of Physical Resource Blocks (PRBs) assigned to the PSSCH resource pool is specified by a starting PRB number ($n_{subCHRBstart}$) and a number of subchannels ($N_{subCH}$), each consisting of a set of contiguous PRBs ($n_{subCHsize}$).

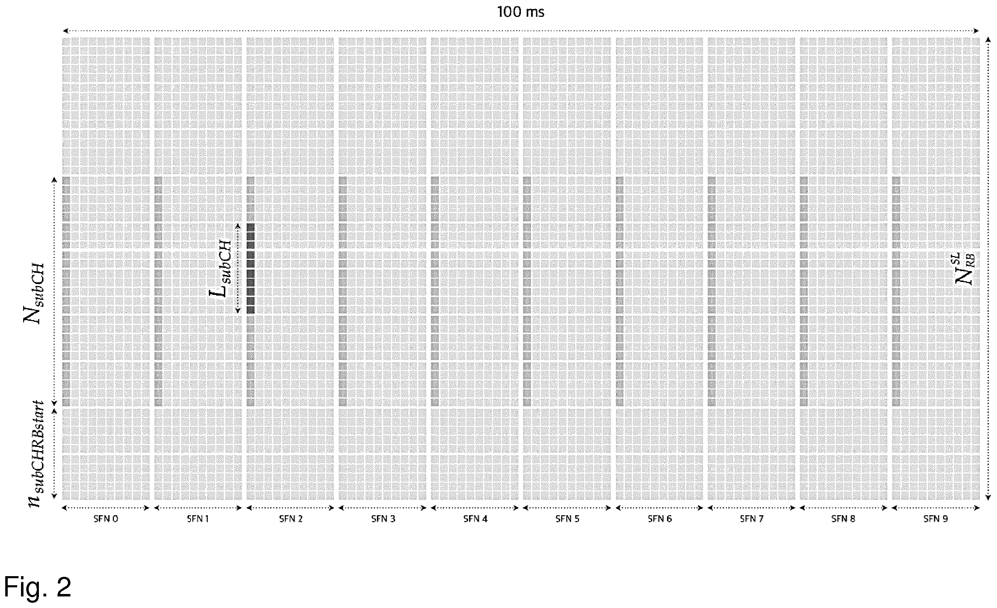

Figure 2 shows an example of a candidate resource consisting of $L_{subCH}$ = 2 contiguous subchannels within a PSSCH resource pool (paremeters: $b_0 \dots b_9$ = 10000 00000, $n_{subCHRBstart}$ = 10 PRBs, $N_{subCH}$ = 5 subchannels, $n_{subCHsize}$ = 5 PRBs). Any set of $L_{subCH}$ contiguous subchannels in a given subframe within the PSSCH resource pool within a certain time window (so as to fulfill the latency requirement) corresponds to a candidate resource.

The specification 3GPP TS 36.213 specifies a "UE procedure for determining the subset of resources to be reported to higher layers in PSSCH resource selection in sidelink transmission mode 4", which is based on sensing. Specifically, the UE performs two measurements defined in 3GPP TS 36.214: PSSCH Reference Signal Received Power (PSSCH-RSRP) and Sidelink Received Signal Strength Indicator (S-RSSI).

When requested by higher layers, the UE determines the set of resources to be reported to higher layers for PSSCH transmission according to the following steps. The total number of candidate resources is denoted by $M_{total}$.

First, the UE excludes among all candidate resources: resources it has no measurement information for (e.g., corresponding to subframes in which its transmissions occur - as it cannot monitor those subframes due to self-interference) and resources reserved by other nearby UEs with an associated PSSCH-RSRP above a certain (priority-dependent) threshold.

From the remaining candidate resources, the PHY layer reports to the MAC (Medium Access Control) layer only 20% of the total number of candidate resources $M_{total}$, namely those with the lowest observed S-RSSI values. The MAC layer then selects a resource randomly among the reported resources.

While the aforementioned mode 4 solution is justified by the desire to minimize control signaling overhead in view of the relatively relaxed reliability requirements of the broadcast V2X services it was designed for (e.g., Cooperative Awareness Message (CAM), Decentralized Environmental Notification Message (DENM)), the new 5G eV2X service requirements specified in 3GPP TS 22.186 (Rel-15) demand new solutions - possibly incurring higher overhead - that address the higher reliability requirements of the new use cases (platooning, sensor sharing, etc.), many of which may be unicast.

From the perspective of the higher reliability requirements specified in 3GPP TS 22.186, the mode 4 solution has the following shortcomings: First, sensing at the transmitting UE does not necessarily provide an accurate picture of the interference situation at the receiving UE(s), giving rise to the well-known hidden terminal problem (i.e., the receiving UE is exposed to interference sources not detectable by the transmitting UE). Second, sensing at the transmitting UE does not necessarily provide an accurate picture of the impact the UE's transmissions may have on nearby (receiving) UEs. Thus, a UE may select a PSSCH resource in which its transmissions degrade the quality of other receiving UEs in the proximity. Third, sensing is omnidirectional. There is no explicit support for directional antennas and/or beamforming.

In light of the above, there is a need for improved devices and methods for sidelink communication, allowing efficient and cost-effective radio resource allocation and data transmission for sidelink communication.

Document WO 2016/163972 A1 describes an apparatus of a User Equipment, UE, and a readable storage medium for control signaling for enhanced device-to-device, D2D, communication. An UE exchanges, with one or more D2D UEs, sidelink control information, SCI, transmission resources to negotiate physical resources for bi-directional SCI transmission and SCI reception. The UE determines physical resource allocation for SCI communication based on the exchange to identify selected SCI periods for the UE. The UE processes SCI for transmission to the one or more D2D UEs on the selected SCI periods. The UE processes D2D UE SCI, received from the one or more D2D UEs, at the UE on the selected SCI periods.

## SUMMARY

It is an object of the disclosure to provide improved sidelink communication devices for sidelink communication, allowing efficient and cost-effective radio resource allocation and data transmission for sidelink communication. Moreover, a computer program comprising program code for performing a method performed by the sidelink communication device is provided.

The foregoing and other objects are achieved by the subject matter of the independent claims. Further implementation forms are apparent from the dependent claims, the description and the figures.

Thus, the present invention is set out by the set of appended claims. In the following, parts of the description and drawing referring to examples, which are not covered by the claims are not presented as embodiments of the invention, but as illustrative examples useful for understanding the invention

Generally, embodiments of the disclosure relate to a transmitting sidelink communication device ($i$) and a receiving sidelink communication device ($j$) as well as corresponding methods for allocating sidelink radio resources and thus transmitting data from the transmitting sidelink communication device ($i$) to the receiving sidelink communication device ($j$) efficiently and cost-effectively.

More specifically, embodiments of the present disclosure can perform PSSCH (Physical Sidelink Shared Channel) resource selection at the receiving sidelink communication device ($j$), which requires introduction of a two-way handshake procedure involving a first message (hereafter also referred to as a Scheduling Request message) and a second message (hereafter also referred to as a Scheduling Grant message), exchanged directly between the transmitting sidelink communication device ($i$), e.g., a transmitting user equipment (UE), and the receiving sidelink communication device ($j$), e.g., a receiving user equipment (UE). The Scheduling Request (SR) message is sent from the transmitting sidelink communication device ($i$) to the receiving sidelink communication device ($j$), and can indicate: one or more candidate carriers; one or more candidate resource pools; a preference list $K_{m,p}$ and/or an exclusion list $X_{m,p}$, for each carrier m and/or resource pool $p$. The Scheduling Grant (SG) message is sent by the receiving sidelink communication device ($j$) to the transmitting sidelink communication device ($i$), and can indicate the selected carrier and/or resource pool, and the location in time and/or frequency of the allocated resource(s).

Furthermore, embodiments of the present disclosure can include in the Scheduling Request (SR) message an exclusion list ($X_{m,p}$) specifying resources to be excluded from resource selection by the receiving sidelink communication device ($j$), wherein the exclusion list may be based on (previously) decoded SG messages from neighboring user equipments (UEs) indicating the resources in which they are scheduled to receive, and introduce directional sensing at the receiving sidelink communication device ($j$) (e.g., the receiving sidelink communication device ($j$) measures S-RSSI while forming a receive beam in the direction of the transmitting sidelink communication device ($i$)). In addition, the exclusion list included in the SR message may be based on the ability of the transmitting sidelink communication device ($i$) to suppress interference to other nearby (receiving) UEs (e.g., by forming a null in the direction of such UEs through transmit beamforming) and/or their ability to suppress interference from the transmitting sidelink communication device ($i$) (e.g., by forming a null in the direction of the transmitting sidelink communication device ($i$) through receive beamforming).

Compared to the currently standardized PSSCH resource selection procedure, embodiments of the present disclosure can offer in particular the following advantages: PSSCH resource selection is performed at the receiving sidelink communication device or UE, which has a more accurate picture of the interference situation than the transmitting sidelink communication device or UE; the exclusion list ($X_{m,p}$) included in the SR message allows the transmitting sidelink communication device to ensure its transmission will not have an adverse impact on nearby receivers; and directional sensing at the receiving sidelink communication device leads to higher spectral efficiency, by increasing resource reuse.

According to a first aspect, a sidelink communication device ($i$) is provided which comprises a transceiver being configured to communicate with at least one neighboring sidelink communication device ($j$) using one or more radio resources of a plurality of radio resources, in particular Physical Sidelink Shared Channel (PSSCH) radio resources, wherein the transceiver is configured to: transmit to the at least one neighboring sidelink communication device ($j$) a first message for requesting one or more radio resources for transmission of sidelink data to the at least one neighboring sidelink communication device ($j$); and/or receive from the at least one neighboring sidelink communication device ($j$) a second message indicating one or more radio resources selected by the at least one neighboring sidelink communication device ($j$) for transmission of sidelink data by the sidelink communication device ($i$) to the at least one neighboring sidelink communication device ($j$).

The first message and/or the second message can be implemented by a plurality of transmissions.

Thus, an improved transmitting sidelink communication device ($i$) is provided, allowing transmitting data for sidelink communication efficiently and cost-effectively.

In a further possible implementation form of the first aspect, the first message contains one or more carrier indicators identifying one or more candidate carriers and/or one or more radio resource pool indicators identifying one or more candidate radio resource pools to be considered for resource selection by the at least one neighboring sidelink communication device ($j$).

The sidelink communication device ($i$) further comprises a processor being configured to: determine a preference list ($K_{m,p}$) specifying one or more radio resources to be considered as preferred choices for resource selection by the at least one neighboring sidelink communication device ($j$); and determine an exclusion list ($X_{m,p}$) specifying one or more radio resources to be excluded from resource selection by the at least one neighboring sidelink communication device ($j$), wherein the preference list ($K_{m,p}$) and the exclusion list ($X_{m,p}$) are transmitted to the at least one neighboring sidelink communication device (j).

The processor is configured to determine the exclusion list ($X_{m,p}$) on the basis of a schedule availability of the sidelink communication device ($i$).

The processor is configured to determine the exclusion list ($X_{m,p}$) on the basis of a message received from at least one other neighboring sidelink communication device ($l$) indicating one or more radio resources in which the at least one other neighboring sidelink communication device ($l$) is scheduled to receive sidelink data.

In a further possible implementation form of the first aspect, the processor is configured to determine the exclusion list ($X_{m,p}$) on the basis of a signal strength, in particular a Reference Signal Received Power (RSRP), measured by the sidelink communication device ($i$), in particular on the basis of a sidelink reference signal transmitted by the at least one other neighboring sidelink communication device ($l$).

In a further possible implementation form of the first aspect, the processor is configured to determine the exclusion list ($X_{m,p}$) on the basis of a signal strength, in particular an interference headroom, provided by the at least one other neighboring sidelink communication device ($l$).

In a further possible implementation form of the first aspect, the processor is configured to determine the exclusion list ($X_{m,p}$) on the basis of a measure for the ability of the at least one other neighboring sidelink communication device ($l$) to suppress interference from the sidelink communication device ($i$) by using a specific receiver configuration, in particular using a specific antenna or beamforming configuration.

In a further possible implementation form of the first aspect, the processor is configured to determine the exclusion list ($X_{m,p}$) on the basis of a measure for the ability of the sidelink communication device ($i$) to suppress interference to the at least one other neighboring sidelink communication device ($l$) by using a specific transmitter configuration, in particular using a specific antenna or beamforming configuration, in particular corresponding to a transmitter configuration to be used to transmit to the at least one neighboring sidelink communication device ($j$).

In a further possible implementation form of the first aspect, the processor is configured to encode the preference list ($K_{m,p}$) and/or the exclusion list ($X_{m,p}$) by means of a list of one or more resource indices, wherein the respective resource index identifies a specific radio resource.

In a further possible implementation form of the first aspect, the processor is configured to encode the preference list ($K_{m,p}$) and/or the exclusion list ($X_{m,p}$) by means of a bitmap, in particular a binary vector or binary matrix comprising a plurality of binary elements, wherein each binary element indicates whether a radio resource at a corresponding position in time and/or frequency belongs to the preference list ($K_{m,p}$) and/or the exclusion list ($X_{m,p}$).

In a further possible implementation form of the first aspect, the processor is configured to encode the preference list ($K_{m,p}$) and/or the exclusion list ($X_{m,p}$) by means of a value range in the time and/or frequency domain.

In a further possible implementation form of the first aspect, the first message contains information about a buffer status and/or one or more parameters related to traffic characteristics of the sidelink data to be transmitted to the at least one neighboring sidelink communication device (*j*), in particular a resource size, a resource reservation interval and/or a priority.

In a further possible implementation form of the first aspect, the transceiver is configured to select a radio resource for transmission of the first message from a plurality of radio resources of a radio resource pool, in particular a Physical Sidelink Control Channel (PSCCH) radio resource pool, on the basis of channel sensing, in particular on the basis of a Sidelink Received Signal Strength Indicator (S-RSSI), performed by the sidelink communication device (*i*).

In a further possible implementation form of the first aspect, the transceiver is configured to receive information about a radio resource for transmission of the first message from a base station.

In a further possible implementation form of the first aspect, the transceiver is configured to transmit the first message directionally, in particular by forming a transmit beam in a direction of the at least one neighboring sidelink communication device (*j*).

In a further possible implementation form of the first aspect, the second message contains a carrier indicator identifying a selected carrier among one or more candidate carriers and/or a radio resource pool indicator identifying a selected radio resource pool among one or more candidate radio resource pools for transmission by the sidelink communication device (*i*).

In a further possible implementation form of the first aspect, the processor is configured to determine an identity of a selected carrier and/or radio resource pool on the basis of an identity of a carrier and/or radio resource pool in which the second message is received.

In a further possible implementation form of the first aspect, the sidelink communication device (*i*) is configured to determine a location in time and/or frequency of the one or more radio resources selected by the at least one neighboring sidelink communication device (*j*) on the basis of a location in time and/or frequency of a radio resource in which the second message is received.

According to a second but non-claimed aspect, the disclosure relates to a method of operating a sidelink communication device (*i*) comprising a transceiver being configured to communicate with at least one neighboring sidelink communication device (*j*) using one or more radio resources of a plurality of radio resources, in particular Physical Sidelink Shared Channel (PSSCH) radio resources, wherein the method comprises: transmitting to the at least one neighboring sidelink communication device (*j*) a first message for requesting one or more radio resources for transmission of sidelink data to the at least one neighboring sidelink communication device (*j*); and/or receiving from the at least one neighboring sidelink communication device (*j*) a second message indicating one or more radio resources selected by the at least one neighboring sidelink communication device (*j*) for transmission of sidelink data by the sidelink communication device (*i*) to the at least one neighboring sidelink communication device (*j*).

Thus, an improved method is provided, allowing transmitting data for sidelink communication efficiently and cost-effectively.

According to a third aspect, a sidelink communication device (*j*) is provided which comprises a transceiver being configured to communicate with at least one neighboring sidelink communication device (*i*) using one or more radio resources of a plurality of radio resources, in particular Physical Sidelink Shared Channel (PSSCH) radio resources, wherein the transceiver is configured to: receive from the at least one neighboring sidelink communication device (*i*) a first message for requesting one or more radio resources for transmission of sidelink data to the sidelink communication device (*j*); and/or transmit to the at least one neighboring sidelink communication device (*i*) a second message indicating one or more radio resources selected by the sidelink communication device (*j*) for transmission of sidelink data by the at least one neighboring sidelink communication device (*i*) to the sidelink communication device (*j*).

Thus, an improved receiving sidelink communication device (*j*) for allocating radio resources to a transmitting sidelink communication device (*i*) is provided.

In a further possible implementation form of the third aspect, the first message contains one or more carrier indicators identifying one or more candidate carriers and/or one or more radio resource pool indicators identifying one or more candidate radio resource pools to be considered for resource selection by the sidelink communication device (*j*).

In a further possible implementation form of the third aspect, an identity of a candidate carrier and/or radio resource pool to be considered for resource selection by the sidelink communication device (*j*) is determined on the basis of an identity of a carrier and/or radio resource pool in which the first message is received.

The first message comprises: a preference list ($K_{m,p}$) specifying one or more radio resources to be considered as preferred choices for resource selection by the sidelink communication device ($j$); and an exclusion list ($X_{m,p}$) specifying one or more radio resources to be excluded from resource selection by the sidelink communication device ($j$).

In a further possible implementation form of the third aspect, a preference list ($K_{m,p}$) and/or an exclusion list ($X_{m,p}$) are determined on the basis of a location in time and/or frequency of a radio resource in which the first message is received.

The sidelink communication device ($j$) further comprises a processor being configured to select one or more radio resources for transmission of sidelink data by the at least one neighboring sidelink communication device ($i$) to the sidelink communication device ($j$) on the basis of: a preference list ($K_{m,p}$), and an exclusion list ($X_{m,p}$), by removing from consideration any radio resources in the exclusion list ($X_{m,p}$) prior to performing resource selection. The processor can be configured to select one or more radio resources for transmission of sidelink data by the at least one neighboring sidelink communication device ($i$) to the sidelink communication device ($j$) additionally on the basis of a schedule availability of the sidelink communication device ($j$).

The processor is further configured to select one or more radio resources for transmission of sidelink data by the at least one neighboring sidelink communication device ($i$) to the sidelink communication device ($j$) on the basis of an interference related metric ($I_{ij}$) obtained through channel sensing, in particular of a Sidelink Received Signal Strength Indicator (S-RSSI), performed by the sidelink communication device ($j$).

In a further possible implementation form of the third aspect, a selected carrier among one or more candidate carriers, a selected radio resource pool among one or more candidate radio resource pools and/or a selected time slot among one or more candidate time slots for transmission by the at least one neighboring sidelink communication device ($i$) is chosen on the basis of an observed traffic load, in particular a Channel Busy Ratio (CBR) measurement, on the one or more candidate carriers, in the one or more candidate radio resource pools and/or in the one or more candidate time slots.

In a further possible implementation form of the third aspect, the sidelink communication device ($j$) is configured to perform channel sensing, in particular of a Sidelink Received Signal Strength Indicator (S-RSSI), with a specific receiver configuration, in particular using a specific antenna or beamforming configuration, in particular corresponding to a receiver configuration to be used to receive from the at least one neighboring sidelink communication device ($i$).

In a further possible implementation form of the third aspect, the transceiver is further configured to transmit the second message to at least one other neighboring sidelink communication device ($k$).

In a further possible implementation form of the third aspect, the second message contains a measure for the ability of the sidelink communication device ($j$) to suppress interference from the at least one other neighboring sidelink communication device ($k$), in particular by forming a null in a direction thereof.

In a further possible implementation form of the third aspect, the second message contains a signal strength, in particular an interference headroom, measured by the sidelink communication device ($j$).

In a further possible implementation form of the third aspect, the second message contains information about a modulation and coding scheme to be used by the at least one neighboring sidelink communication device ($i$) for transmitting the sidelink data and/or an expiration time or lifetime.

In a further possible implementation form of the third aspect, the transceiver is further configured to transmit the second message on the basis of an observed increase and/or decrease of interference in one or more radio resources.

In a further possible implementation form of the third aspect, a radio resource for transmission of the second message is selected from a plurality of radio resources of a radio resource pool, in particular a Physical Sidelink Control Channel (PSCCH) radio resource pool, on the basis of channel sensing, in particular on the basis of a Sidelink Received Signal Strength Indicator (S-RSSI), performed by the sidelink communication device ($j$).

In a further possible implementation form of the third aspect, the transceiver is configured to receive information about a radio resource for transmission of the second message from a base station.

In a further possible implementation form of the third aspect, the transceiver is configured to transmit the second message directionally, in particular by forming a transmit beam in a direction of the at least one neighboring sidelink communication device ($i$).

In a further possible implementation form of the third aspect, a radio resource for transmission of the second message is selected on the basis of a location in time and/or frequency of a radio resource in which the first message is received.

In a further possible implementation form of the third aspect, the second message contains a carrier indicator identifying a selected carrier among one or more candidate carriers and/or a radio resource pool indicator identifying a selected radio resource pool among one or more candidate radio resource pools for transmission by the at least one neighboring sidelink communication device ($i$).

According to a fourth non-claimed aspect, the disclosure relates to a method of operating a sidelink communication device ($j$) comprising a transceiver being configured to communicate with at least one neighboring sidelink communication device ($i$) using one or more radio resources of a plurality of radio resources, in particular Physical Sidelink Shared Channel (PSSCH) radio resources, wherein the method comprises: receiving from the at least one neighboring sidelink communication device (*i*) a first message for requesting one or more radio resources for transmission of sidelink data to the sidelink communication device (*j*); and/or transmitting to the at least one neighboring sidelink communication device (*i*) a second message indicating one or more radio resources selected by the sidelink communication device (*j*) for transmission of sidelink data by the at least one neighboring sidelink communication device (*i*) to the sidelink communication device (*j*).

Thus, an improved method for allocating radio resources to a sidelink communication device is provided.

According to a fifth aspect, the disclosure relates to a computer program comprising program code for performing the method of the second or fourth aspect when executed on a computer.

The disclosure can be implemented in hardware and/or software.

BRIEF DESCRIPTION OF THE DRAWINGS

Further examples of the disclosure will be described with respect to the following figures, wherein:

Figure 1 shows a table illustrating different performance requirements for transmission of messages in a 3GPP system under different eV2X scenarios;

Figure 2 shows a schematic diagram illustrating an example of a candidate resource within a PSSCH (Physical Sidelink Shared Channel) resource pool;

Figure 3 shows a schematic diagram illustrating a sidelink communication device according to an example in communication with a neighboring sidelink communication device according to an example;

Figure 4 shows a schematic diagram summarizing a procedure for selection of PSSCH (Physical Sidelink Shared Channel) resources according to an example;

Figure 5 shows a schematic diagram illustrating an example of resources to be preferred and resources to be excluded on a certain carrier in a certain resource pool;

Figure 6 shows a schematic diagram illustrating transmit beamforming and receive beamforming by a plurality of sidelink communication devices according to an example;

Figure 7 shows a diagram illustrating a corresponding method of operating a transmitting sidelink communication device according to an example; and

Figure 8 shows a diagram illustrating a corresponding method of operating a receiving sidelink communication device according to an example.

In the various figures, identical reference signs will be used for identical or at least functionally equivalent features.

DETAILED DESCRIPTION

In the following description, reference is made to the accompanying drawings, which form part of the disclosure, and in which are shown, by way of illustration, specific aspects in which the present disclosure may be placed.. The following detailed description, therefore, is not to be taken in a limiting sense, as the scope of the present disclosure is defined by the appended claims.

For instance, it will be appreciated that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims, examples with different functional blocks or processing units are described, which are connected with each other or exchange signals. It will be appreciated that the present disclosure covers examples as well, which include additional functional blocks or processing units that are arranged between the functional blocks or processing units of the examples described below.

Finally, it is understood that the features of the various exemplary aspects described herein may be combined with each other, unless specifically noted otherwise.

As will be described in more detail in the following, examples of the disclosure relate to a V2X communication network comprising a transmitting sidelink communication device (*i*) and a receiving sidelink communication device (*j*), which allow for an efficient utilization of sidelink radio resources.

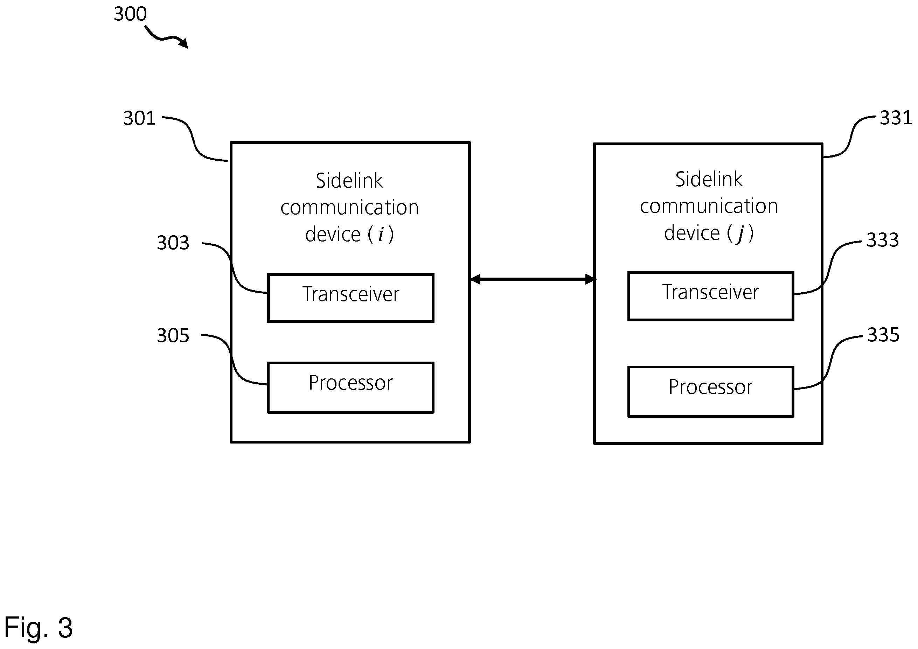

Figure 3 shows a schematic diagram illustrating a communication network 300 comprising a sidelink communication device (*i*) 301 according to an example and at least one neighboring sidelink communication device (*j*) 331 according to an example. The sidelink communication device (*i*) 301 is configured to communicate with the at least one neighboring sidelink communication device (*j*) 331 using one or more radio resources of a plurality of radio resources, in particular Physical Sidelink Shared Channel (PSSCH) radio resources.

In the example shown in figure 3, the sidelink communication device (*i*) 301 or the at least one neighboring sidelink communication device (*j*) 331 could be implemented in the form of a user entity such as a mobile phone or a vehicle or a communication module of a vehicle. However, it will be appreciated that examples of the disclosure apply to sidelink communication devices other than mobile phones or vehicles as well.

As illustrated in figure 3, the sidelink communication device ($i$) 301 comprises a transceiver 303 which is configured to transmit to the at least one neighboring sidelink communication device ($j$) 331 a first message for requesting one or more radio resources for transmission of sidelink data to the at least one neighboring sidelink communication device ($j$) 331, and to receive from the at least one neighboring sidelink communication device ($j$) 331 a second message indicating one or more radio resources selected by the at least one neighboring sidelink communication device (j) 331 for transmission of sidelink data by the sidelink communication device ($i$) 301 to the at least one neighboring sidelink communication device ($j$) 331.

The first message contains one or more carrier indicators identifying one or more candidate carriers and/or one or more radio resource pool indicators identifying one or more candidate radio resource pools to be considered for resource selection by the at least one neighboring sidelink communication device ($j$) 331. The second message contains a carrier indicator identifying a selected carrier among one or more candidate carriers and/or a radio resource pool indicator identifying a selected radio resource pool among one or more candidate radio resource pools for transmission by the sidelink communication device ($i$) 301.

In an example, the first message contains information about a buffer status and/or one or more parameters related to traffic characteristics of the sidelink data to be transmitted to the at least one neighboring sidelink communication device ($j$) 331, in particular a resource size, a resource reservation interval and/or a priority.

Furthermore, the sidelink communication device ($i$) 301 comprises a processor 305 which is configured to determine a preference list ($K_{m,p}$) specifying one or more radio resources to be considered as preferred choices for resource selection by the at least one neighboring sidelink communication device ($j$) 331; and determine an exclusion list ($X_{m,p}$) specifying one or more radio resources to be excluded from resource selection by the at least one neighboring sidelink communication device ($j$) 331, wherein the preference list ($K_{m,p}$) and the exclusion list ($X_{m,p}$) are transmitted to the at least one neighboring sidelink communication device ($j$) 331.

The first message comprises: the preference list ($K_{m,p}$) specifying one or more radio resources to be considered as preferred choices for resource selection by the at least one neighboring sidelink communication device ($j$) 331; and the exclusion list ($X_{m,p}$) specifying one or more radio resources to be excluded from resource selection by the at least one neighboring sidelink communication device ($j$) 331.

According to an example, the processor 305 of the sidelink communication device (i) 301 can determine the exclusion list ($X_{m,p}$) on the basis of: a schedule availability of the sidelink communication device ($i$)

301; a message received from at least one other neighboring sidelink communication device ($l$) indicating one or more radio resources in which the at least one other neighboring sidelink communication device ($l$) is scheduled to receive sidelink data; a signal strength, in particular a Reference Signal Received Power (RSRP), measured by the sidelink communication device ($i$) 301, in particular on the basis of a sidelink reference signal transmitted by the at least one other neighboring sidelink communication device ($l$) or in particular an interference headroom, provided by the at least one other neighboring sidelink communication device ($l$); a measure for the ability of the at least one other neighboring sidelink communication device ($l$) to suppress interference from the sidelink communication device ($i$) 301 by using a specific receiver configuration, in particular using a specific antenna or beamforming configuration; and/or a measure for the ability of the sidelink communication device ($i$) 301 to suppress interference to the at least one other neighboring sidelink communication device ($l$) by using a specific transmitter configuration, in particular using a specific antenna or beamforming configuration, in particular corresponding to a transmitter configuration to be used to transmit to the at least one neighboring sidelink communication device ($j$) 331.

According to an example, the processor 305 is configured to encode the preference list ($K_{m,p}$) and/or the exclusion list ($X_{m,p}$) by means of a list of one or more resource indices, wherein the respective resource index identifies a specific radio resource, and/or by means of a bitmap, in particular a binary vector or binary matrix comprising a plurality of binary elements, wherein each binary element indicates whether a radio resource at a corresponding position in time and/or frequency belongs to the preference list ($K_{m,p}$) and/or the exclusion list ($X_{m,p}$), and/or by means of a value range in the time and/or frequency domain.

According to an example, the processor 305 is configured to determine an identity of a selected carrier and/or radio resource pool on the basis of an identity of a carrier and/or radio resource pool in which the second message is received. The sidelink communication device ($i$) 301 is also configured to determine a location in time and/or frequency of the one or more radio resources selected by the at least one neighboring sidelink communication device ($j$) on the basis of a location in time and/or frequency of a radio resource in which the second message is received.

According to an example, the transceiver 303 of the sidelink communication device ($i$) 301 is configured to select a radio resource for transmission of the first message from a plurality of radio resources of a radio resource pool, in particular a Physical Sidelink Control Channel (PSCCH) radio resource pool, on the basis of channel sensing, in particular on the basis of a Sidelink Received Signal Strength Indicator (S-RSSI), performed by the sidelink communication device ($i$) 301.

According to an example, the transceiver 303 is configured to receive information about a radio resource for transmission of the first message from a base station.

In an example, the transceiver 303 is configured to transmit the first message directionally, in particular by forming a transmit beam in a direction of the at least one neighboring sidelink communication device (*j*) 331.

As can be taken from figure 3, the sidelink communication device (*j*) 331 comprises a transceiver 333 configured to receive from the at least one neighboring sidelink communication device (*i*) 301 the first message for requesting one or more radio resources for transmission of sidelink data to the sidelink communication device (*j*) 331; and/or transmit to the at least one neighboring sidelink communication device (*i*) 301 the second message indicating one or more radio resources selected by the sidelink communication device (*j*) 331 for transmission of sidelink data by the at least one neighboring sidelink communication device (*i*) 301 to the sidelink communication device (*j*) 331.

The sidelink communication device (*j*) 331 further comprises a processor 335 being configured to select one or more radio resources for transmission of sidelink data by the at least one neighboring sidelink communication device (*i*) 301 to the sidelink communication device (*j*) 331 on the basis of:, a preference list ($K_{m,p}$), and/or an exclusion list ($X_{m,p}$), by removing from consideration any radio resources in the exclusion list ($X_{m,p}$) prior to performing resource selection. The processor can be configured to select one or more radio resources for transmission of sidelink data by the at least one neighboring sidelink communication device (*i*) to the sidelink communication device (*j*) additionally on the basis of a schedule availability of the sidelink communication device (*j*) 331.

The processor 335 of the sidelink communication device (*j*) 331 is further configured to select one or more radio resources for transmission of sidelink data by the at least one neighboring sidelink communication device (*i*) 301 to the sidelink communication device (*j*) 331 on the basis of an interference related metric ($I_{ij}$) obtained through channel sensing, in particular of a Sidelink Received Signal Strength Indicator (S-RSSI). Furthermore, the sidelink communication device (*j*) 331 can perform channel sensing, in particular of a Sidelink Received Signal Strength Indicator (S-RSSI), with a specific receiver configuration, in particular using a specific antenna or beamforming configuration, in particular corresponding to a receiver configuration to be used to receive from the at least one neighboring sidelink communication device (*i*) 301.

According to an example, a selected carrier among one or more candidate carriers, a selected radio resource pool among one or more candidate radio resource pools and/or a selected time slot among one or more candidate time slots for transmission by the at least one neighboring sidelink communication device (*i*) 301 is chosen on the basis of an observed traffic load, in particular a Channel Busy Ratio (CBR) measurement, on the one or more candidate carriers, in the one or more candidate radio resource pools and/or in the one or more candidate time slots.

In an example, the transceiver 333 of the sidelink communication device (*j*) 331 is further configured to transmit the second message to at least one other neighboring sidelink communication device (*k*). In an example, the transceiver 333 is further configured to transmit the second message on the basis of an observed increase and/or decrease of interference in one or more radio resources. The second message contains: a measure for the ability of the sidelink communication device (*j*) 331 to suppress interference from the at least one other neighboring sidelink communication device (*k*), in particular by forming a null in a direction thereof; a signal strength, in particular an interference headroom, measured by the sidelink communication device (*j*) 331; information about a modulation and coding scheme to be used by the sidelink communication device (*i*) 301 for transmitting the sidelink data and/or an expiration time or lifetime.

In an example, a radio resource for transmission of the second message is selected from a plurality of radio resources of a radio resource pool, in particular a Physical Sidelink Control Channel (PSCCH) radio resource pool, on the basis of channel sensing, in particular on the basis of a Sidelink Received Signal Strength Indicator (S-RSSI), performed by the sidelink communication device (*j*) 331, and/or is selected on the basis of a location in time and/or frequency of a radio resource in which the first message is received. The second message contains a carrier indicator identifying a selected carrier among one or more candidate carriers and/or a radio resource pool indicator identifying a selected radio resource pool among one or more candidate radio resource pools for transmission by the at least one neighboring sidelink communication device (*i*) 301.

In an example, the transceiver 333 of the sidelink communication device (*j*) 331 is configured to receive information about a radio resource for transmission of the second message from a base station.

In an example, the transceiver 333 of the sidelink communication device (*j*) 331 is configured to transmit the second message directionally, in particular by forming a transmit beam in a direction of the at least one neighboring sidelink communication device (*i*) 301.

More details about the allocation of sidelink radio resources for sidelink communication between the transmitting sidelink communication device (*i*) 101 and the receiving sidelink communication device (*j*) will be described in the following.

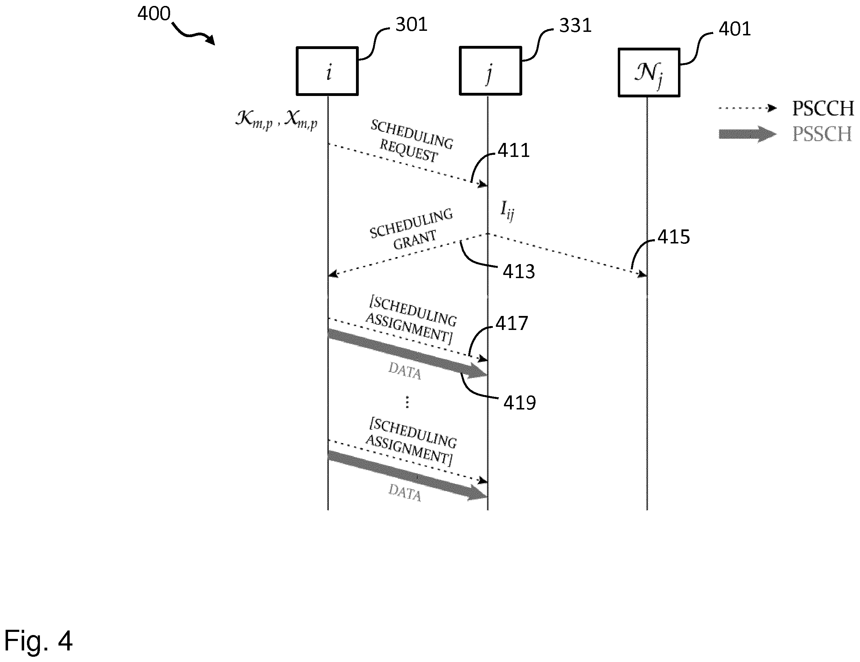

Figure 4 shows a schematic diagram summarizing a procedure 400 for selection of PSSCH (Physical Sidelink Shared Channel) resources according to an example.

The PSSCH resource selection for transmission of sidelink data over a link between a sidelink communication device (*i*) 301 and a neighboring sidelink communication device ($j$) 331 is performed via a two-way handshake procedure, e.g., over the PSCCH (Physical Sidelink Control Channel), wherein the handshake involves the exchange of two sidelink control messages: a first message (i.e., a Scheduling Request, SR, message) and a second message (i.e., a Scheduling Grant, SG, message).

A Scheduling Request (SR) message is used by the sidelink communication device ($i$) 301 to request Sidelink Shared Channel (SL-SCH) resources for transmission of data to the sidelink communication device ($j$) 331. The SR message, transmitted by the sidelink communication device ($i$) 301 directly to the sidelink communication device ($j$) 331, may contain: one or more carrier indicators, identifying one or more candidate carriers to be considered for resource selection; one or more resource pool indicators, identifying one or more candidate resource pools to be considered for resource selection; a preference list $K_{m,p}$ of one or more resources to be considered as preferred choices for resource selection on carrier m and resource pool $p$, for one or more carriers and/or resource pools; an exclusion list $X_{m,p}$ of one or more resources to be excluded from resource selection on carrier m and resource pool p, for one or more carriers and/or resource pools; resource size (e.g., number of subchannels, $L_{subCH}$) or buffer status (e.g., number of bytes); resource reservation interval (i.e., the time gap between consecutive transmit opportunities, $P_{rsvp\_TX}$); and/or priority.

The procedure 400 shown in figure 4 comprises the following steps:

In a first step 411, the sidelink communication device ($i$) 301 transmits to the sidelink communication device ($j$) 331 a Scheduling Request, SR, message for requesting one or more radio resources for transmission of sidelink data to the sidelink communication device ($j$) 331.

In a second step 413, the sidelink communication device ($j$) 331 transmits to the sidelink communication device ($i$) 301 a Scheduling Grant, SG, message indicating one or more radio resources selected by the sidelink communication device ($j$) 331 for transmission of sidelink data by the sidelink communication device ($i$) 301.

In a third step 415, the Scheduling Grant, SG, message may also be received and decoded by other neighboring sidelink communication devices ($N_j$) 401, which thus become aware of the allocation.

In a fourth step 417, the sidelink communication device ($i$) 301 transmits to the sidelink communication device ($j$) 331 a Scheduling Assignment, SA, message containing information required for reception of sidelink data by the sidelink communication device ($j$) 331.

In a fifth step 419, the sidelink communication device ($i$) 301 transmits sidelink data to the sidelink communication device ($j$) 331.

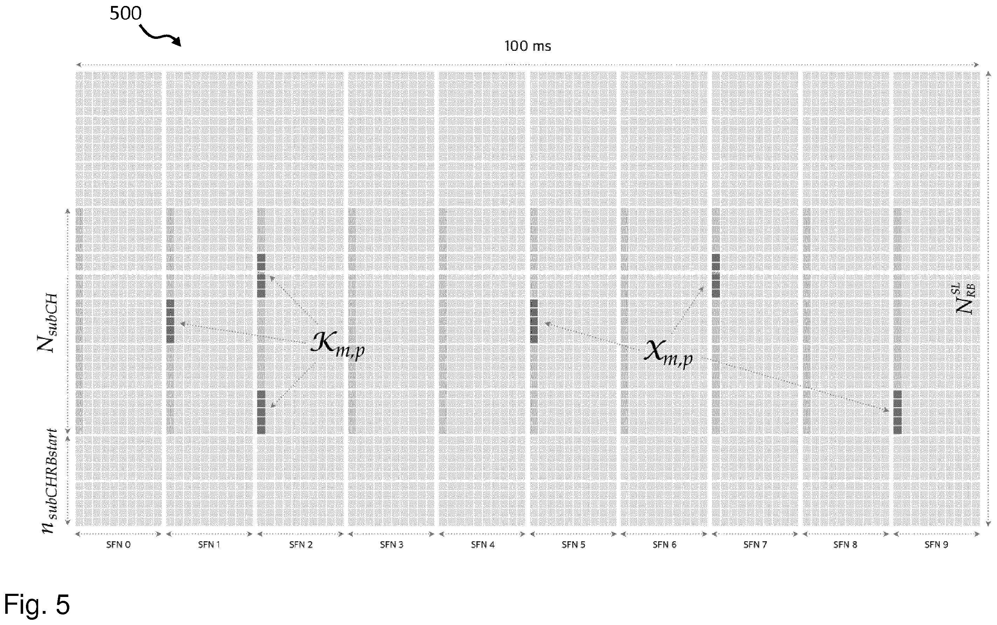

Figure 5 shows an example of resources 500 to be preferred ($K_{m,p}$) and resources to be excluded ($X_{m,p}$) on a certain carrier ($m$) in a certain resource pool ($p$). The preference list $K_{m,p}$ and/or the exclusion list $X_{m,p}$ may be encoded by means of a list of resource indices, where each index points to a resource within the resource pool. A list of $n$ resource indices may incur an overhead of $n \lceil \log_2(N_r) \rceil$ bits , where $N_r$ denotes the number of indexable resources. In figure 5, there are $N_r$ = 50 indexable resources (subframe/subchannel pairs) in the resource pool within a time window of 100 ms (5 subchannels $\times$ 10 subframes). In this example, the preference and exclusion lists may be encoded as follows:

$$K_{m,p} = \langle r_{0,2}, r_{2,1}, r_{3,2} \rangle$$

$$X_{m,p} = \langle r_{0,9}, r_{2,5}, r_{3,7} \rangle$$

where $r_{u,v}$ denotes the index of a radio resource corresponding to subchannel u and subframe v (within the resource pool). Each list of $n$ = 3 resource indices would incur an overhead of 18 bits.

Alternatively, the preference list $K_{m,p}$ and/or the exclusion list $X_{m,p}$ may be encoded by means of a bitmap, in particular a binary vector or matrix, where each binary element indicates whether a resource (e.g., subframe/-subchannel pair) at a respective position in time and/or frequency belongs to the list. In the example shown in figure 5, the preference and exclusion lists could be encoded as follows:

$$K_{m,p} = \begin{pmatrix} 0 & 0 & 0 & 0 & 0 & 0 & 0 & 0 & 0 & 0 \\ 0 & 0 & 1 & 0 & 0 & 0 & 0 & 0 & 0 & 0 \\ 0 & 1 & 0 & 0 & 0 & 0 & 0 & 0 & 0 & 0 \\ 0 & 0 & 0 & 0 & 0 & 0 & 0 & 0 & 0 & 0 \\ 0 & 0 & 1 & 0 & 0 & 0 & 0 & 0 & 0 & 0 \end{pmatrix}$$

$$X_{m,p} = \begin{pmatrix} 0 & 0 & 0 & 0 & 0 & 0 & 0 & 0 & 0 & 0 \\ 0 & 0 & 0 & 0 & 0 & 0 & 0 & 1 & 0 & 0 \\ 0 & 0 & 0 & 0 & 0 & 1 & 0 & 0 & 0 & 0 \\ 0 & 0 & 0 & 0 & 0 & 0 & 0 & 0 & 0 & 0 \\ 0 & 0 & 0 & 0 & 0 & 0 & 0 & 0 & 0 & 1 \end{pmatrix}.$$

The preference list $K_{m,p}$ and/or the exclusion list $X_{m,p}$ may also be encoded by means of a value range in the time and/or frequency domain. In this case, the value range may be indicated explicitly or implicitly, e.g., based on the location in time and/or frequency of the radio resource used for transmission of the SR message. For example, the preferred and/or excluded subframes may have a fixed timing relationship with respect to the subframe in which the SR is transmitted.

In particular, the exclusion list $X_{m,p}$ may include: resources in which the sidelink communication device (*i*) 301 is not available for transmission to the sidelink communication device (*j*) 331 on carrier *m* and resource pool *p*, e.g., subframes in which the sidelink communication device (*i*) 301 is scheduled to receive (self-interference) and/or subframes/subchannels in which the sidelink communication device (*i*) 301 is already scheduled to transmit; and/or resources in which transmission of the sidelink communication device (*i*) 301 would have an adverse impact on neighboring UEs scheduled to receive in those resources on carrier *m* and resource pool *p*.

The exclusion list $X_{m,p}$ may include any resource in which (the sidelink communication device (*i*) 301 is aware that) a neighboring sidelink communication device (*l*) is scheduled to receive (on carrier *m* and resource pool *p*). In particular, the sidelink communication device (*i*) 301 may decide whether or not to include a specific resource in the exclusion list based on a measured signal strength $P_l$, such as a Reference Signal Received Power (RSRP), being above a certain threshold $\gamma$ (i.e., $P_l > \gamma$) or above an interference headroom $H_l$ (i.e., $P_l > H_l$) in that resource, if known. The signal strength $P_l$ serves as a measure of how close the sidelink communication device (*i*) 301 is to the neighboring sidelink communication device (*l*), and thus how strong the impact of a transmission from the sidelink communication device (*i*) 301 would be on the neighboring sidelink communication device (*l*). The signal strength $P_l$ may be measured by the sidelink communication device (i) 301 based on a (recent) transmission from the sidelink communication device (*l*), e.g., a CAM (Cooperative Awareness Message) or a BSM (Basic Safety Message).

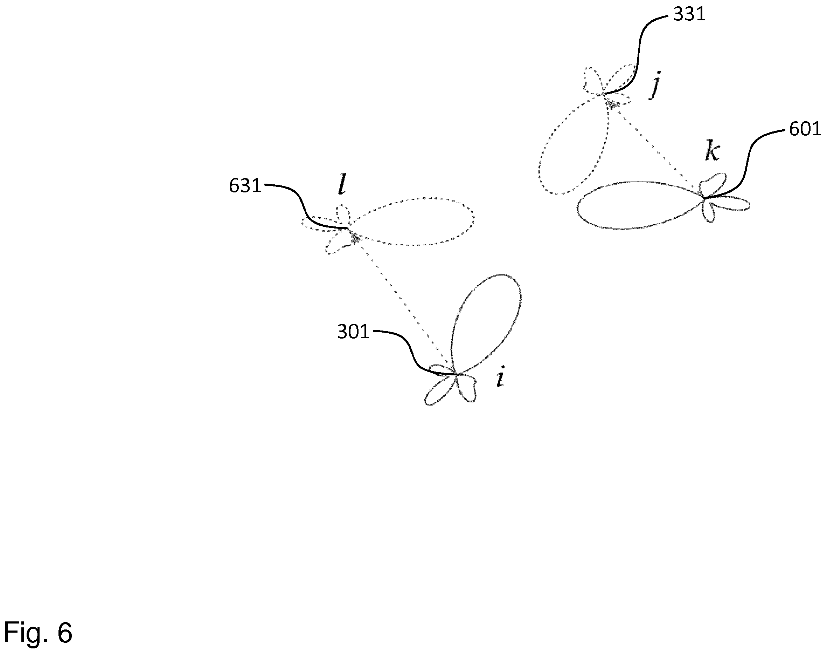

Figure 6 shows a schematic diagram illustrating transmit beams (solid radiation patterns) and receive beams (dashed radiation patterns) formed by sidelink communication devices according to an example, which allow link (*i,j*) between the sidelink communication device (*i*) 301 and the sidelink communication device (*j*) 331 and link (*k, l*) between the sidelink communication device (*k*) 601 and the sidelink communication device (*l*) 631 to use the same radio resource without interference despite their proximity.

As illustrated in figure 6, the sidelink communication device (*i*) 301 may decide whether or not to include a specific resource in the exclusion list based on its ability to suppress interference toward the sidelink communication device (*l*) 631, e.g., by using a directional antenna or a multi-antenna transmission technique such as beamforming when transmitting to the sidelink communication device (*j*) 331, and/or (if known) the ability of the sidelink communication device (*l*) 631 to suppress interference from the sidelink communication device (*i*) 301, e.g., by using a directional antenna or a multi-antenna reception technique, such as beamforming) when receiving from its corresponding transmitter, i.e. the sidelink communication device (*k*) 601.

The SR message may be transmitted directionally, e.g., by the sidelink communication device (*i*) 301 forming a transmit beam in the direction of the sidelink communication device (*j*) 331.

A Scheduling Grant (SG) message is used by the sidelink communication device (*j*) 331 to allocate Sidelink Shared Channel (SL-SCH) resources for transmission of data by the sidelink communication device (*i*) 301 to the sidelink communication device (j) 331. The SG message may be transmitted by the sidelink communication device (*j*) 331 only to the sidelink communication device (*i*) 301, but it may also be broadcast to all neighboring sidelink communication devices ($N_j$) 401 (so as to make them aware of the allocation).

The SG message may contain: a carrier indicator, identifying the selected carrier among the candidate carriers; a resource pool indicator, identifying the selected resource pool among the candidate resource pools; location in time and/or frequency of one or more resources allocated to the sidelink communication device (*i*) 301 for transmission to the sidelink communication device (*j*) 331 on the selected carrier and/or resource pool; modulation and coding scheme (MCS) to be used by the sidelink communication device (*i*) 301; and/or lifetime (expiration time) of the resource grant.

The identity of the selected carrier and/or resource pool may be indicated implicitly by the carrier and/or resource pool used to transmit the SG message. Similarly, the location in time and/or frequency of the allocated resources may be indicated implicitly by the location in time and/or frequency of the radio resource used to transmit the SG message.

In addition, the SG message may advantageously include information on whether and/or to what extent the sidelink communication device (*j*) 331 has the ability to suppress interference from one or more neighboring sidelink communication devices when receiving from the sidelink communication device (*i*) 301. If included, the information on whether and/or to what extent the sidelink communication device (*j*) 331 has the ability to suppress interference from one or more neighboring sidelink communication devices when receiving from the sidelink communication device (*i*) 301 may be indicated by an ID of the neighboring sidelink communication device and/or an index into a predefined lookup table, e.g., a table of interference suppression values in [dB].

Furthermore, the SG message may advantageously include a measure of the interference headroom, e.g., based on a target SINR (Signal-to-Interference-plus-Noise Ratio) and observed interference, in the one or more allocated resources. If included, the interference headroom in the one or more allocated resources may be indicated by an index into a predefined lookup table, e.g., a table of power levels in [mW].

Upon receipt of the SG message, the sidelink communication device (*i*) 301 proceeds with transmission of sidelink data to the sidelink communication device (*j*) 331 in the allocated resource(s). As shown in Figure 4, this may or may not be accompanied by the transmission of a Scheduling Assignment (SA) message containing Sidelink Control Information (SCI) for the receiving sidelink communication device, as specified in 3GPP Release 14.

Neighboring sidelink communication devices ($N_j$) 401 that receive and decode the SG message (if broadcast) can use the contents of the SG message (e.g., location in time and/or frequency of the allocated resources, interference headroom, ability of the sidelink communication device ($j$) 331 to suppress interference from one or more neighboring sidelink communication devices) to update their scheduling information (i.e., knowledge about radio resources allocated to nearby links) in order to determine an exclusion list ($X_{m,p}$) when transmitting an SR in the future.

The SG message may be transmitted directionally, e.g., by the sidelink communication device ($j$) 331 forming a transmit beam in the direction of the sidelink communication device ($i$) 301. In this case, certain neighboring sidelink communication devices may not be aware of the granted resource. This is not a problem though, as long as the sidelink communication device ($j$) 331 uses the same beam when receiving data from the sidelink communication device ($i$) 301. Advantageously, such neighboring UEs, by virtue of not being aware of the granted resource, may end up using it for their own transmissions, thus increasing resource reuse and network capacity.

An SG message may also be used to reschedule a link in case the link quality is degraded, e.g., due to mobility. Carrier selection, resource pool selection and/or time slot selection by the sidelink communication device ($j$) 331 may be performed based on a measurement of the observed traffic load, e.g., a Channel Busy Ratio (CBR) measurement, on one or more candidate carriers, resource pools and/or time slots.

Prior to performing resource selection, in particular on carrier m and resource pool $p$, the sidelink communication device ($j$) 331 removes the following from consideration: resources in the exclusion list $X_{m,p}$; resources in which the sidelink communication device ($j$) 331 is not available for reception from the sidelink communication device ($i$) 301 on carrier m and resource pool $p$, e.g., subframes in which the sidelink communication device ($j$) 331 is scheduled to transmit (self-interference) or subframes/subchannels in which the sidelink communication device ($j$) 331 is already scheduled to receive.

The sidelink communication device ($j$) 331 may then select one or more resources from the remaining resources based on: the preference list $K_{m,p}$ containing preferred choices from the perspective of the sidelink communication device ($i$) 301 and/or an interference related metric $I_{ij}$.

In particular, the interference related metric $I_{ij}$ may be defined based on a Sidelink Received Signal Strength Indicator (S-RSSI) measurement (e.g., average or maximum observed S-RSSI over a certain time interval) performed by the sidelink communication device ($j$)

331, obtained by sensing the wireless channel in a specific resource with a specific receiver configuration, in particular the receiver configuration to be used to receive from the sidelink communication device ($i$) 301. A receiver configuration may, e.g., refer to a specific antenna of a plurality of (possibly directional) antennas (e.g., in case of a vehicle: front-bumper antenna, rear-bumper antenna, side-mirror antenna, rooftop antenna, etc.), or it may indicate a specific beamforming configuration.

The radio resource for transmission of SR and SG messages may be selected using transmitter-based resource selection based on sensing (e.g., in a separate PSCCH resource pool), as specified in 3GPP Release 14 (mode 4). Alternatively, when in coverage, the radio resource for transmission of SR and SG messages may be allocated by a base station, as specified in 3GPP Release 14 (mode 3).

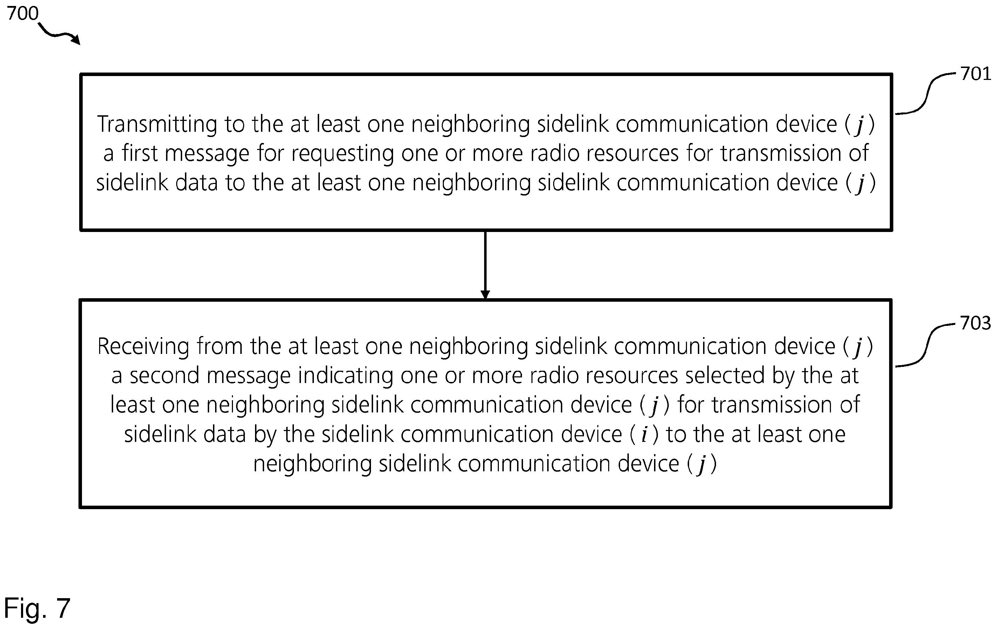

Figure 7 shows a diagram illustrating a corresponding method 700 of operating a sidelink communication device ($i$) 301 according to an example which is configured to communicate with at least one neighboring sidelink communication device ($j$) 331 using one or more radio resources of a plurality of radio resources, in particular Physical Sidelink Shared Channel (PSSCH) radio resources.

The method 700 comprises the following steps: a first step 701 of transmitting to the at least one neighboring sidelink communication device ($j$) 331 a first message for requesting one or more radio resources for transmission of sidelink data to the at least one neighboring sidelink communication device ($j$) 331; and/or a second step 703 of receiving from the at least one neighboring sidelink communication device ($j$) 331 a second message indicating one or more radio resources selected by the at least one neighboring sidelink communication device ($j$) 331 for transmission of sidelink data by the sidelink communication device ($i$) 301 to the at least one neighboring sidelink communication device ($j$) 331.

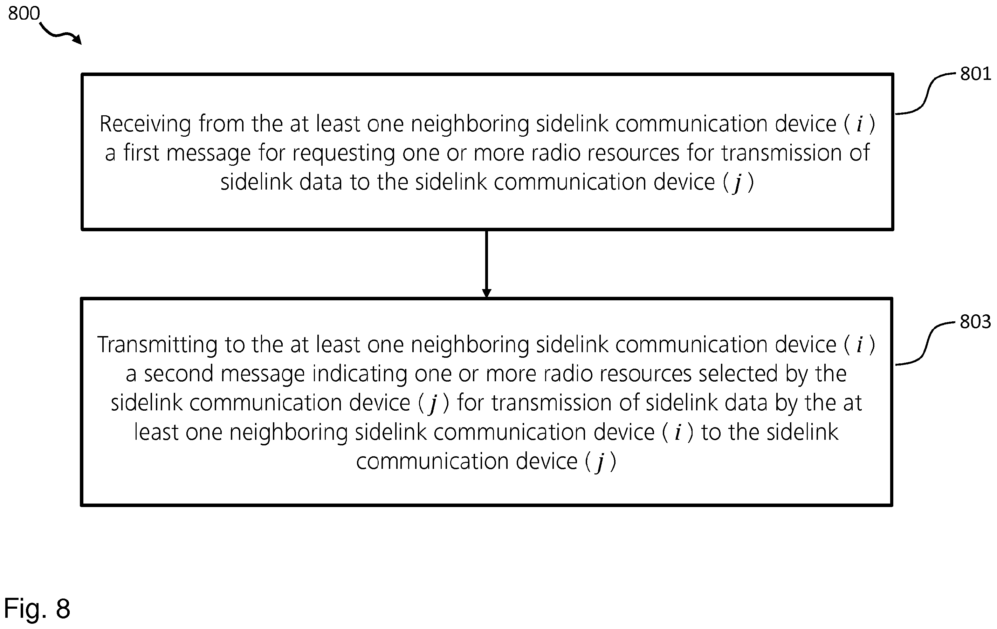

Figure 8 shows a diagram illustrating a corresponding method 800 of operating a sidelink communication device ($j$) 331 comprising a transceiver 333 being configured to communicate with at least one neighboring sidelink communication device ($i$) 301 using one or more radio resources of a plurality of radio resources, in particular Physical Sidelink Shared Channel (PSSCH) radio resources.

The method 800 comprises the following steps: a first step 801 of receiving from the at least one neighboring sidelink communication device ($i$) 301 a first message for requesting one or more radio resources for transmission of sidelink data to the sidelink communication device ($j$) 331; and/or a second step 803 of transmitting to the at least one neighboring sidelink communication device ($i$) 301 a second message indicating one or more radio resources selected by the sidelink communication device ($j$) 331 for transmission of sidelink data by the at least one neighboring sidelink communication device ($i$) 301 to the sidelink communication device ($j$)

331.

While a particular feature or aspect of the disclosure may have been disclosed with respect to only one of several implementations or examples, such feature or aspect may be combined with one or more other features or aspects of the other implementations or examples as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless of whether they are in direct physical or electrical contact, or they are not in direct contact with each other.

This disclosure is intended to cover any adaptations or variations of the specific aspects discussed herein.

## Claims

1. A sidelink communication device ($i$, 301) comprising a transceiver (303) being configured to communicate with at least one neighboring sidelink communication device ($j$, 331) using one or more radio resources of a plurality of radio resources, wherein the transceiver (303) is configured to:

   transmit to the at least one neighboring sidelink communication device ($j$, 331) a first message for requesting one or more radio resources for transmission of sidelink data to the at least one neighboring sidelink communication device ($j$, 331); and
   receive from the at least one neighboring sidelink communication device ($j$, 331) a second message indicating one or more radio resources selected by the at least one neighboring sidelink communication device ($j$, 331) for transmission of sidelink data by the sidelink communication device ($i$, 301) to the at least one neighboring sidelink communication device ($j$, 331),
   wherein the sidelink communication device ($i$, 301) is **characterized by** further comrprising a processor (305) being configured to:

   determine an exclusion list ($\mathcal{X}_{m,p}$) specifying one or more radio resources to be excluded from resource selection by the at least one neighboring sidelink communication device ($j$, 331), wherein the exclusion list ($\mathcal{X}_{m,p}$) is transmitted to the at least one neighboring sidelink communication device ($j$, 331), and wherein the processor (305) is configured to determine the exclusion list ($\mathcal{X}_{m,p}$) on the basis of a message received from at least one other neighboring sidelink communication device ($l$) indicating one or more radio resources in which the at least one other neighboring sidelink communication device ($l$) is scheduled to receive sidelink data, and wherein the processor (305) is further configured to:

   determine a preference list ($\mathcal{K}_{m,p}$) specifying one or more radio resources to be considered as preferred choices for resource selection by the at least one neighboring sidelink communication device ($j$, 331), wherein the preference list ($\mathcal{K}_{m,p}$) is transmitted to the at least one neighboring sidelink communication device ($j$, 331).

2. The sidelink communication device ($i$, 301) of claim 1, wherein the radio resources are Physical Sidelink Shared Channel, PSSCH, radio resources.

3. The sidelink communication device ($i$, 301) of any one of the preceding claims, wherein the transceiver (303) is configured to transmit the first message directionally by forming a transmit beam in a direction of the at least one neighboring sidelink communication device ($j$, 331).

4. The sidelink communication device ($i$, 301) of any of claims 1 to 3, wherein the processor (305) is configured to determine the exclusion list ($\mathcal{X}_{m,p}$) on the basis of a signal strength, namely a Reference Signal Received Power, RSRP, measured by the sidelink communication device ($i$, 301), on the basis of a sidelink reference signal transmitted by the at least one other neighboring sidelink communication device ($l$).

5. The sidelink communication device ($i$, 301) of any of claims 1 to 3, wherein the processor (305) is configured to determine the exclusion list ($\mathcal{X}_{m,p}$) on the basis of a signal strength, namely an interference headroom, provided by the at least one other neighboring sidelink communication device ($l$).

6. The sidelink communication device ($i$, 301) of any one of claims 1 to 3, wherein the processor (305) is configured to determine the exclusion list ($\mathcal{X}_{m,p}$) on the basis of a measure for the ability of the at least one other neighboring sidelink communication device ($l$) to suppress interference from the sidelink communication device ($i$, 301) by using a specific receiver configuration, namely using a specific antenna or beamforming configuration.

7. The sidelink communication device (*i*, 301) of any one of claims 1 to 3, wherein the processor (305) is configured to determine the exclusion list ($\mathcal{X}_{m,p}$) on the basis of a measure for the ability of the sidelink communication device (*i*, 301) to suppress interference to the at least one other neighboring sidelink communication device (*l*) by using a specific transmitter configuration, namely using a specific antenna or beamforming configuration, corresponding to a transmitter configuration to be used to transmit to the at least one neighboring sidelink communication device (*j*, 331).

8. The sidelink communication device (*i*, 301) of any one of the preceding claims, wherein the second message contains a carrier indicator identifying a selected carrier among one or more candidate carriers and/or a radio resource pool indicator identifying a selected radio resource pool among one or more candidate radio resource pools for transmission by the sidelink communication device (*i*, 301).

9. A sidelink communication device (*j*, 331) comprising a transceiver (333) being configured to communicate with at least one neighboring sidelink communication device (*i*, 301) using one or more radio resources of a plurality of radio resources, wherein the transceiver (333) is configured to:

  receive from the at least one neighboring sidelink communication device (*i*, 301) a first message for requesting one or more radio resources for transmission of sidelink data to the sidelink communication device (*j*, 331); and
  transmit to the at least one neighboring sidelink communication device (*i*, 301) a second message indicating one or more radio resources selected by the sidelink communication device (*j*, 331) for transmission of sidelink data by the at least one neighboring sidelink communication device (*i*, 301) to the sidelink communication device (*j*, 331),
  wherein
  the sidelink communication device (*j*, 331) is **characterized by** further comprising a processor (335) being configured to select one or more radio resources for transmission of sidelink data by the at least one neighboring sidelink communication device (ī, 301) to the sidelink communication device (*j*, 331) on the basis of: a preference list ($\mathcal{K}_{m,p}$), and an exclusion list ($\mathcal{X}_{m,p}$), by removing from consideration any radio resources in the exclusion list ($\mathcal{X}_{m,p}$) prior to performing resource selection, and

wherein the processor (335) is further configured to select one or more radio resources for transmission of sidelink data by the at least one neighboring sidelink communication device (i, 301) to the sidelink communication device (*j*, 331) on the basis of an interference related metric ($I_{ij}$) obtained through channel sensing performed by the sidelink communication device (*j*, 331).

10. The sidelink communication device (*j*, 331) of claim 9, wherein the radio resources are Physical Sidelink Shared Channel, PSSCH, radio resources, and wherein the transceiver (333) is further configured to transmit the second message on the basis of an observed increase and/or decrease of interference in one or more radio resources.

11. The sidelink communication device (*j*, 331) of claim 9 or 10, wherein the interference related metric ($I_{ij}$) is obtained through channel sensing of a Sidelink Received Signal Strength Indicator, S-RSSI, performed by the sidelink communication device (j, 331).

12. The sidelink communication device (*j*, 331) of claim 11, wherein a selected carrier among one or more candidate carriers, a selected radio resource pool among one or more candidate radio resource pools and/or a selected time slot among one or more candidate time slots for transmission by the at least one neighboring sidelink communication device (*i*, 301) is chosen on the basis of an observed traffic load, namely a Channel Busy Ratio, CBR, measurement, on the one or more candidate carriers, in the one or more candidate radio resource pools and/or in the one or more candidate time slots.

13. The sidelink communication device (*j*, 331) of claim 11 or 12, configured to perform channel sensing the Sidelink Received Signal Strength Indicator, S-RSSI, with a specific receiver configuration, namely using a specific antenna or beamforming configuration, corresponding to a receiver configuration to be used to receive from the at least one neighboring sidelink communication device (i, 301).

14. The sidelink communication device (*j*, 331) of any one of claims 9 to 13, wherein the transceiver (333) is further configured to transmit the second message directionally by forming a transmit beam in a direction of the at least one neighboring sidelink communication device (i, 301).

15. A computer program comprising program code for performing a method performed by the sidelink communication device (*i*, 301) of any one of claims 1 to 8 or a method performed by the sidelink communication device (*j*, 331) of any one of claims 9 to 14.

**Patentansprüche**

1. Sidelink-Kommunikationsvorrichtung ($i$, 301), die einen Transceiver (303) umfasst, der dazu konfiguriert ist, mit mindestens einer benachbarten Sidelink-Kommunikationsvorrichtung ($j$, 331) unter Verwendung einer oder mehrerer Funkressourcen aus einer Vielzahl von Funkressourcen zu kommunizieren, wobei der Transceiver (303) zu Folgendem konfiguriert ist:

   Übertragen einer ersten Nachricht an die mindestens eine benachbarte Sidelink-Kommunikationsvorrichtung ($j$, 331) zum Anfordern einer oder mehrerer Funkressourcen für die Übertragung von Sidelink-Daten an die mindestens eine benachbarte Sidelink-Kommunikationsvorrichtung ($j$, 331); und
   Empfangen, von der mindestens einen benachbarten Sidelink-Kommunikationsvorrichtung ($j$, 331), einer zweiten Nachricht, die eine oder mehrere Funkressourcen angibt, die durch die mindestens eine benachbarte Sidelink-Kommunikationsvorrichtung ($j$, 331) zur Übertragung von Sidelink-Daten durch die Sidelink-Kommunikationsvorrichtung ($i$, 301) an die mindestens eine benachbarte Sidelink-Kommunikationsvorrichtung ($j$, 331) ausgewählt werden,
   wobei die Sidelink-Kommunikationsvorrichtung ($i$, 301) **dadurch gekennzeichnet ist, dass** sie ferner einen Prozessor (305) umfasst, der zu Folgendem konfiguriert ist:

   Bestimmen einer Ausschlussliste ($\mathcal{X}_{m,p}$), die eine oder mehrere Funkressourcen spezifiziert, die von der Ressourcenauswahl durch die mindestens eine benachbarte Sidelink-Kommunikationsvorrichtung ($j$, 331) ausgeschlossen werden sollen, wobei
   die Ausschlussliste ($\mathcal{X}_{m,p}$) an die mindestens eine benachbarte Sidelink-Kommunikationsvorrichtung ($j$, 331) übertragen wird und wobei der Prozessor (305) dazu konfiguriert ist, die Ausschlussliste ($\mathcal{X}_{m,p}$) basierend auf einer von mindestens einer anderen benachbarten Sidelink-Kommunikationsvorrichtung ($l$) empfangenen Nachricht zu bestimmen, die eine oder mehrere Funkressourcen angibt, in denen die mindestens eine andere benachbarte Sidelink-Kommunikationsvorrichtung ($l$) zum Empfangen von Sidelink-Daten eingeplant ist, und
   wobei der Prozessor (305) ferner zu Folgendem konfiguriert ist:

   Bestimmen einer Präferenzliste ($\mathcal{K}_{m,p}$), die eine oder mehrere Funkressourcen spezifiziert, die als bevorzugte Auswahlmöglichkeiten für die Ressourcenauswahl durch die mindestens eine benachbarte Sidelink-Kommunikationsvorrichtung ($j$, 331) berücksichtigt werden sollen, wobei die

   Präferenzliste ($\mathcal{K}_{m,p}$) an die mindestens eine benachbarte Sidelink-Kommunikationsvorrichtung ($j$, 331) übertragen wird.

2. Sidelink-Kommunikationsvorrichtung ($i$, 301) gemäß Anspruch 1, wobei die Funkressourcen gemeinsam genutzte physische Sidelink-Kanal (Physical Sidelink Shared Channel, PSSCH)-Funkressourcen sind.

3. Sidelink-Kommunikationsvorrichtung (i, 301) gemäß einem der vorhergehenden Ansprüche, wobei der Transceiver (303) dazu konfiguriert ist, die erste Nachricht gerichtet zu übertragen, indem er einen Übertragungsstrahl in eine Richtung der mindestens einen benachbarten Sidelink-Kommunikationsvorrichtung (j, 331) bildet.

4. Sidelink-Kommunikationsvorrichtung ($i$, 301) gemäß einem der Ansprüche 1 bis 3, wobei der Prozessor (305) dazu konfiguriert ist, die Ausschlussliste ($\mathcal{X}_{m,p}$) basierend auf einer Signalstärke, nämlich einer Referenzsignalempfangsleistung (Reference Signal Received Power, RSRP), zu bestimmen, die durch die Sidelink-Kommunikationsvorrichtung ($i$, 301) gemessen wird, basierend auf einem durch die mindestens eine andere benachbarte Sidelink-Kommunikationsvorrichtung ($l$) gesendeten Sidelink-Referenzsignal.

5. Sidelink-Kommunikationsvorrichtung ($i$, 301) gemäß einem der Ansprüche 1 bis 3, wobei der Prozessor (305) dazu konfiguriert ist, die Ausschlussliste ($\mathcal{X}_{m,p}$) basierend auf einer Signalstärke, nämlich einem Störabstandsspielraum, zu bestimmen, die durch die mindestens eine andere benachbarte Sidelink-Kommunikationsvorrichtung ($l$) bereitgestellt wird.

6. Sidelink-Kommunikationsvorrichtung ($i$, 301) gemäß einem der Ansprüche 1 bis 3, wobei der Prozessor (305) dazu konfiguriert ist, die Ausschlussliste ($\mathcal{X}_{m,p}$) basierend auf einem Maß für die Fähigkeit der mindestens einen anderen benachbarten Sidelink-Kommunikationsvorrichtung ($l$) zu bestimmen, Störungen durch die Sidelink-Kommunikationsvorrichtung ($i$, 301) durch Verwendung einer bestimmten Empfängerkonfiguration, nämlich unter Verwendung einer bestimmten Antennen- oder Strahlformungskonfiguration, zu unterdrücken.

**7.** Sidelink-Kommunikationsvorrichtung (*i*, 301) gemäß einem der Ansprüche 1 bis 3, wobei der Prozessor (305) dazu konfiguriert ist, die Ausschlussliste ($\mathcal{X}_{m,p}$) basierend auf einem Maß für die Fähigkeit der Sidelink-Kommunikationsvorrichtung (*i*, 301) zu bestimmen, Störungen der mindestens einen anderen benachbarten Sidelink-Kommunikationsvorrichtung (*l*) durch Verwendung einer bestimmten Senderkonfiguration zu unterdrücken, nämlich unter Verwendung einer bestimmten Antennen- oder Strahlformungskonfiguration, die einer Senderkonfiguration entspricht, die zum Übertragen an die mindestens eine benachbarte Sidelink-Kommunikationsvorrichtung (*j*, 331) verwendet werden soll.

**8.** Sidelink-Kommunikationsvorrichtung (*i*, 301) gemäß einem der vorhergehenden Ansprüche, wobei die zweite Nachricht einen Trägerindikator enthält, der einen ausgewählten Träger unter einem oder mehreren Kandidatenträgern identifiziert, und/oder einen Funkressourcenpoolindikator, der einen ausgewählten Funkressourcenpool unter einem oder mehreren Kandidatenfunkressourcenpools zur Übertragung durch die Sidelink-Kommunikationsvorrichtung (*i*, 301) identifiziert.

**9.** Sidelink-Kommunikationsvorrichtung (*j*, 331), die einen Transceiver (333) umfasst, der dazu konfiguriert ist, mit mindestens einer benachbarten Sidelink-Kommunikationsvorrichtung (*i*, 301) unter Verwendung einer oder mehrerer Funkressourcen aus einer Vielzahl von Funkressourcen zu kommunizieren, wobei der Transceiver (333) zu Folgendem konfiguriert ist:

Empfangen einer ersten Nachricht von der mindestens einen benachbarten Sidelink-Kommunikationsvorrichtung (*i*, 301) zum Anfordern einer oder mehrerer Funkressourcen für die Übertragung von Sidelink-Daten an die Sidelink-Kommunikationsvorrichtung (*j*, 331); und Übertragen, an die mindestens eine benachbarte Sidelink-Kommunikationsvorrichtung (*i*, 301), einer zweiten Nachricht, die eine oder mehrere Funkressourcen angibt, die durch die Sidelink-Kommunikationsvorrichtung (*j*, 331) zur Übertragung von Sidelink-Daten durch die mindestens eine benachbarte Sidelink-Kommunikationsvorrichtung (*i*, 301) an die Sidelink-Kommunikationsvorrichtung (*j*, 331) ausgewählt werden, wobei die Sidelink-Kommunikationsvorrichtung (*j*, 331) **dadurch gekennzeichnet ist, dass** sie ferner einen Prozessor (335) umfasst, der dazu konfiguriert ist, eine oder mehrere Funkressourcen für die Übertragung von Sidelink-Daten durch die mindestens eine benachbarte Sidelink-Kommunikationsvorrichtung (*i*, 301) an die Sidelink-Kommunikationsvorrichtung (*j*, 331) basierend auf: einer Präferenzliste ($\mathcal{K}_{m,p}$) und einer Ausschlussliste ($\mathcal{X}_{m,p}$) auszuwählen, indem vor dem Durchführen der Ressourcenauswahl alle Funkressourcen in der Ausschlussliste ($\mathcal{X}_{m,p}$) aus der Betrachtung entfernt werden, und wobei der Prozessor (335) ferner dazu konfiguriert ist, eine oder mehrere Funkressourcen zur Übertragung von Sidelink-Daten durch die mindestens eine benachbarte Sidelink-Kommunikationsvorrichtung (*i*, 301) an die Sidelink-Kommunikationsvorrichtung (*j*, 331) basierend auf einer störungsbezogenen Metrik ($I_{ij}$) auszuwählen, die über eine durch die Sidelink-Kommunikationsvorrichtung (*j*, 331) durchgeführte Kanalerfassung erlangt wird.

**10.** Sidelink-Kommunikationsvorrichtung (*j*, 331) gemäß Anspruch 9, wobei die Funkressourcen gemeinsam genutzte physische Sidelink-Kanal (PSSCH)-Funkressourcen sind, und wobei der Transceiver (333) ferner dazu konfiguriert ist, die zweite Nachricht basierend auf einer beobachteten Zunahme und/oder Abnahme von Störungen in einer oder mehreren Funkressourcen zu übertragen.

**11.** Sidelink-Kommunikationsvorrichtung (*j*, 331) gemäß Anspruch 9 oder 10, wobei die störungsbezogene Metrik ($I_{ij}$) über Kanalerfassung eines Sidelink-Empfangssignalstärkeindikators (Sidelink Received Signal Strength Indicator, S-RSSI) erlangt wird, die durch die Sidelink-Kommunikationsvorrichtung (j, 331) durchgeführt wird.

**12.** Sidelink-Kommunikationsvorrichtung (*j*, 331) gemäß Anspruch 11, wobei ein ausgewählter Träger aus einem oder mehreren Kandidatenträgern, ein ausgewählter Funkressourcenpool aus einem oder mehreren Kandidatenfunkressourcenpools und/oder ein ausgewählter Zeitschlitz aus einem oder mehreren Kandidatenzeitschlitzen zur Übertragung durch die mindestens eine benachbarte Sidelink-Kommunikationsvorrichtung (i, 301) basierend auf einer beobachteten Verkehrslast ausgewählt wird, nämlich einer Kanalbelegungsverhältnis (Channel Busy Ratio, CBR)-Messung, auf dem einen oder den mehreren Kandidatenträgern, in dem einen oder den mehreren Kandidatenfunkressourcenpools und/oder in dem einen oder den mehreren Kandidatenzeitschlitzen.

**13.** Sidelink-Kommunikationsvorrichtung (*j*, 331) gemäß Anspruch 11 oder 12, die dazu konfiguriert ist, eine Kanalerfassung des Sidelink-Empfangssignalstärkeindikators (S-RSSI) mit einer spezifischen Empfängerkonfiguration durchzuführen, nämlich unter Verwendung einer spezifischen Antennen- oder Strahlformungskonfiguration, die einer Empfängerkonfiguration entspricht, die zum Empfangen von der mindestens einen benachbarten Sidelink-Kommunikationsvorrichtung (*i*, 301) verwendet werden soll.

**14.** Sidelink-Kommunikationsvorrichtung (*j*, 331) gemäß einem der Ansprüche 9 bis 13, wobei der Transceiver (333) ferner dazu konfiguriert ist, die zweite Nachricht gerichtet zu übertragen, indem er einen Übertragungsstrahl in eine Richtung der mindestens einen benachbarten Sidelink-Kommunikationsvorrichtung (j, 301) bildet.

**15.** Computerprogramm, das Programmcode zum Durchführen eines Verfahrens umfasst, das durch die Sidelink-Kommunikationsvorrichtung (*i*, 301) gemäß einem der Ansprüche 1 bis 8 durchgeführt wird, oder eines Verfahrens, das durch die Sidelink-Kommunikationsvorrichtung (*j*, 331) gemäß einem der Ansprüche 9 bis 14 durchgeführt wird.

## Revendications

**1.** Dispositif de communication de liaison latérale (*i*, 301) comprenant un émetteur-récepteur (303) étant configuré pour communiquer avec au moins un dispositif de communication de liaison latérale voisin (*j*, 331) à l'aide d'une ou plusieurs ressources radio parmi une pluralité de ressources radio, dans lequel l'émetteur-récepteur (303) est configuré pour :

transmettre, à l'au moins un dispositif de communication de liaison latérale voisin (*j*, 331), un premier message demandant une ou plusieurs ressources radio pour la transmission de données de liaison latérale à l'au moins un dispositif de communication de liaison latérale voisin (*j*, 331) ; et
recevoir, de l'au moins un dispositif de communication de liaison latérale voisin (*j*, 331) un second message indiquant une ou plusieurs ressources radio sélectionnées par l'au moins un dispositif de communication de liaison latérale voisin (*j*, 331) pour la transmission de données de liaison latérale par le dispositif de communication de liaison latérale (*i*, 301) à l'au moins un dispositif de communication de liaison latérale voisin (*j*, 331),
dans lequel le dispositif de communication de liaison latérale (i, 301) est **caractérisé en ce**

**qu'**il comrprend également un processeur (305) étant configuré pour :

déterminer une liste d'exclusion ($\mathcal{X}_{m,p}$) spécifiant une ou plusieurs ressources radio à exclure de la sélection de ressources par l'au moins un dispositif de communication de liaison latérale voisin (*j*, 331), dans lequel la liste d'exclusion ($\mathcal{X}_{m,p}$) est transmise à l'au moins un dispositif de communication de liaison latérale voisin (*j*, 331), et dans lequel le processeur (305) est configuré pour déterminer la liste d'exclusion (

$\mathcal{X}_{m,p}$) sur la base d'un message reçu d'au moins un autre dispositif de communication de liaison latérale voisin (*l*) indiquant une ou plusieurs ressources radio dans lesquelles l'au moins un autre dispositif de communication de liaison latérale voisin (*l*) est programmé pour recevoir des données de liaison latérale, et
dans lequel le processeur (305) est également configuré pour :
déterminer une liste de préférences (

$\mathcal{K}_{m,p}$) spécifiant une ou plusieurs ressources radio à considérer comme choix préférés pour la sélection de ressources par l'au moins un dispositif de communication de liaison latérale voisin (*j*, 331), dans laquelle

quelle la liste de préférences ($\mathcal{K}_{m,p}$) est transmise à l'au moins un dispositif de communication de liaison latérale voisin (*j*, 331).

**2.** Dispositif de communication de liaison latérale (*i*, 301) selon la revendication 1, dans lequel les ressources radio sont des ressources radio de canal partagé de liaison latérale physique, PSSCH.

**3.** Dispositif de communication de liaison latérale (i, 301) selon l'une quelconque des revendications précédentes, dans lequel l'émetteur-récepteur (303) est configuré pour transmettre le premier message de manière directionnelle en formant un faisceau de transmission dans une direction de l'au moins un dispositif de communication de liaison latérale voisin (j, 331).

**4.** Dispositif de communication de liaison latérale (*i*, 301) selon l'une quelconque des revendications 1 à 3, dans lequel le processeur (305) est configuré pour déterminer la liste d'exclusion ($\mathcal{X}_{m,p}$) sur la base d'une intensité de signal, à savoir une puissance reçue de signal de référence, RSRP, mesurée par le dispositif de communication de liaison latérale (*i*, 301), sur la base d'un signal de référence de liaison latérale transmis par l'au moins un autre dispositif de communication de liaison latérale voisin (1).

5. Dispositif de communication de liaison latérale (*i*, 301) selon l'une quelconque des revendications 1 à 3, dans lequel le processeur (305) est configuré pour déterminer la liste d'exclusion ($\mathcal{X}_{m,p}$) sur la base d'une intensité de signal, à savoir une marge d'interférence, fournie par l'au moins un autre dispositif de communication de liaison latérale voisin (*l*).

6. Dispositif de communication de liaison latérale (i, 301) selon l'une quelconque des revendications 1 à 3, dans lequel le processeur (305) est configuré pour déterminer la liste d'exclusion ($\mathcal{X}_{m,p}$) sur la base d'une mesure de la capacité de l'au moins un autre dispositif de communication de liaison latérale voisin (*l*) à supprimer les interférences provenant du dispositif de communication de liaison latérale (*i*, 301) à l'aide d'une configuration de récepteur spécifique, à savoir à l'aide d'une configuration d'antenne ou de formation de faisceau spécifique.

7. Dispositif de communication de liaison latérale (i, 301) selon l'une quelconque des revendications 1 à 3, dans lequel le processeur (305) est configuré pour déterminer la liste d'exclusion ($\mathcal{X}_{m,p}$) sur la base d'une mesure de la capacité du dispositif de communication de liaison latérale (*i*, 301) à supprimer les interférences avec l'au moins un autre dispositif de communication de liaison latérale voisin (1) à l'aide d'une configuration d'émetteur spécifique, à savoir à l'aide d'une configuration d'antenne ou de formation de faisceau spécifique, correspondant à une configuration d'émetteur à utiliser pour transmettre à l'au moins un dispositif de communication de liaison latérale voisin (*j*, 331).

8. Dispositif de communication de liaison latérale (*i*, 301) selon l'une quelconque des revendications précédentes, dans lequel le second message contient un indicateur de porteuse identifiant une porteuse sélectionnée parmi une ou plusieurs porteuses candidates et/ou un indicateur de pool de ressources radio identifiant un pool de ressources radio sélectionné parmi un ou plusieurs pools de ressources radio candidats pour la transmission par le dispositif de communication de liaison latérale (*i*, 301).

9. Dispositif de communication de liaison latérale (*j*, 331) comprenant un émetteur-récepteur (333) étant configuré pour communiquer avec au moins un dispositif de communication de liaison latérale voisin (*i*, 301) à l'aide d'une ou plusieurs ressources radio parmi une pluralité de ressources radio, dans lequel l'émetteur-récepteur (333) est configuré pour :

recevoir, de l'au moins un dispositif de communication de liaison latérale voisin (*i*, 301), un premier message demandant une ou plusieurs ressources radio pour la transmission de données de liaison latérale au dispositif de communication de liaison latérale (*j*, 331) ; et
transmettre, à l'au moins un dispositif de communication de liaison latérale voisin (*i*, 301) un second message indiquant une ou plusieurs ressources radio sélectionnées par le dispositif de communication de liaison latérale (*j*, 331) pour la transmission de données de liaison latérale par l'au moins un dispositif de communication de liaison latérale voisin (*i*, 301) au dispositif de communication de liaison latérale (*j*, 331),
dans lequel le dispositif de communication de liaison latérale (j, 331) est **caractérisé en ce qu'**il comprend également un processeur (335) étant configuré pour sélectionner une ou plusieurs ressources radio pour la transmission de données de liaison latérale par l'au moins un dispositif de communication de liaison latérale voisin (*i*, 301) au dispositif de communication de liaison latérale (*j*, 331) sur la base : d'une liste de

préférences ($\mathcal{K}_{m,p}$), et d'une liste d'exclusion ($\mathcal{X}_{m,p}$), en retirant de la considération toute ressource radio de la liste d'exclusion ($\mathcal{X}_{m,p}$) avant de réaliser la sélection des ressources, et dans lequel le processeur (335) est également configuré pour sélectionner une ou plusieurs ressources radio pour la transmission de données de liaison latérale par l'au moins un dispositif de communication de liaison latérale voisin (*i*, 301) au dispositif de communication de liaison latérale (*j*, 331) sur la base d'une métrique liée aux interférences ($I_{ij}$) obtenue par la détection de canal réalisée par le dispositif de communication de liaison latérale (*j*, 331).

10. Dispositif de communication de liaison latérale (*j*, 331) selon la revendication 9, dans lequel les ressources radio sont des ressources radio de canal partagé de liaison latérale physique, PSSCH, et dans lequel l'émetteur-récepteur (333) est également configuré pour transmettre le second message sur la base d'une augmentation et/ou d'une diminution observée d'interférence dans une ou plusieurs ressources radio.

11. Dispositif de communication de liaison latérale (*j*, 331) selon la revendication 9 ou 10, dans lequel la métrique liée aux interférences ($I_{ij}$) est obtenue par la détection de canal d'un indicateur d'intensité de signal reçu de liaison latérale, S-RSSI, réalisée par le dispositif de communication de liaison latérale (*j*, 331).

**12.** Dispositif de communication de liaison latérale (*j*, 331) selon la revendication 11, dans lequel une porteuse sélectionnée parmi une ou plusieurs porteuses candidates, un pool de ressources radio sélectionné parmi un ou plusieurs pools de ressources radio candidats et/ou un créneau temporel sélectionné parmi un ou plusieurs créneaux temporels candidats pour la transmission par l'au moins un dispositif de communication de liaison latérale voisin (*i*, 301) est choisi sur la base d'une charge de trafic observée, à savoir une mesure de rapport d'occupation de canal, CBR, sur les une ou plusieurs porteuses candidates, dans les un ou plusieurs pools de ressources radio candidats et/ou dans les un ou plusieurs créneaux temporels candidats.

**13.** Dispositif de communication de liaison latérale (j, 331) selon la revendication 11 ou 12, configuré pour réaliser la détection de canal de l'indicateur d'intensité de signal reçu de liaison latérale, S-RSSI, avec une configuration de récepteur spécifique, à savoir à l'aide d'une antenne ou une configuration de formation de faisceau spécifique, correspondant à une configuration de récepteur à utiliser pour recevoir de l'au moins un dispositif de communication de liaison latérale voisin (*i*, 301).

**14.** Dispositif de communication de liaison latérale (*j*, 331) selon l'une quelconque des revendications 9 à 13, dans lequel l'émetteur-récepteur (333) est également configuré pour transmettre le second message de manière directionnelle en formant un faisceau de transmission dans une direction de l'au moins un dispositif de communication de liaison latérale voisin (i, 301).

**15.** Programme informatique comprenant un code de programme pour la réalisation d'un procédé réalisé par le dispositif de communication de liaison latérale (*i*, 301) selon l'une quelconque des revendications 1 à 8 ou un procédé réalisé par le dispositif de communication de liaison latérale (*j*, 331) selon l'une quelconque des revendications 9 à 14.

| | Payload (bytes) | Transmission rate (messages/s) | Maximum end-to-end latency (ms) | Reliability (%) | Data rate (Mbit/s) | Minimum required communication range (m) |
|---|---|---|---|---|---|---|
| Vehicle platooning | 50-1200 bytes | 30 messages/s | 10 ms | 99.99% | | 80 m |
| Cooperative collision avoidance | 2000 bytes | 100 messages/s | 10 ms | 99.99% | 10 Mbit/s | |
| Emergency trajectory alignment | 2000 bytes | | 3 ms | 99.999% | 30 Mbit/s | 500 m |
| Cooperative lane change | 12000 bytes | | 10 ms | 99.99% | | |
| Sensor information sharing | | | 3 ms | 99.999% | 50 Mbit/s | 200 m |
| Video sharing | | | 10 ms | 99.99% | 700 Mbit/s | 200 m |

Fig. 1

Fig. 2

Fig. 3

Fig. 4

EP 3 831 136 B1

Fig. 5

601

331

$k$

$j$

$i$

$l$

301

631

Fig. 6

700

Transmitting to the at least one neighboring sidelink communication device ($j$) a first message for requesting one or more radio resources for transmission of sidelink data to the at least one neighboring sidelink communication device ($j$)

701

Receiving from the at least one neighboring sidelink communication device ($j$) a second message indicating one or more radio resources selected by the at least one neighboring sidelink communication device ($j$) for transmission of sidelink data by the sidelink communication device ($i$) to the at least one neighboring sidelink communication device ($j$)

703

Fig. 7

EP 3 831 136 B1

Receiving from the at least one neighboring sidelink communication device ( $i$ ) a first message for requesting one or more radio resources for transmission of sidelink data to the sidelink communication device ( $j$ )

801

Transmitting to the at least one neighboring sidelink communication device ( $i$ ) a second message indicating one or more radio resources selected by the sidelink communication device ( $j$ ) for transmission of sidelink data by the at least one neighboring sidelink communication device ( $i$ ) to the sidelink communication device ( $j$ )

803

Fig. 8

EP 3 831 136 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016163972 A1

**Non-patent literature cited in the description**

- LTE; Evolved Universal Terrestrial Radio Access (E-UTRA) and Evolved Universal Terrestrial Radio Access Network (E-UTRAN); Overall description; Stage 2. *3GPP TS 36.300*

- UE procedure for determining the subset of resources to be reported to higher layers in PSSCH resource selection in sidelink transmission mode 4. *3GPP TS 36.213*
- PSSCH Reference Signal Received Power (PSSCH-RSRP) and Sidelink Received Signal Strength Indicator (S-RSSI). *3GPP TS 36.214*